# EUROPÄISCHE PATENTANMELDUNG

(11) **EP 0 785 610 A2**
(43) Veröffentlichungstag der Anmeldung: **23.07.1997**
(21) Anmeldenummer: 97100629.1
(22) Anmeldetag: 16.01.1997
(51) Int. Cl.: H02H 3/04, H02H 7/08

(54) **Uberwachungsgerät mit Selbstdiagnose**

(30) Priorität: 22.01.1996 DE 19602122
(71) Anmelder: SIEMENS AKTIENGESELLSCHAFT, 80333 München (DE)
(72) Erfinder: Fröhlich, Paul, Dipl.-Ing., 92237 Sulbach-Rosenberg (DE)

(57) **Zusammenfassung**

Bei einem Überwachungsgerät mit einer Testeinrichtung (5) zum Test der Funktionsfähigkeit einer Stromerfassungseinrichtung (2) und einer Stromauswertungseinrichtung (3) ist ein Mikrocontroller (14) mit einem Ablaufprogramm (26) vorgesehen, das nach Aktivierung der Testeinrichtung (5) verschiedene Testphasen des Funktionstests einleitet.

## Beschreibung

Die Erfindung bezieht sich auf ein Überwachungsgerät mit einer Stromerfassungseinrichtung, mit einer Stromauswertungseinrichtung, mit einer Abschalteinrichtung zur Öffnung des Verbraucherstromkreises bei Ansteuerung durch die Stromauswertungseinrichtung.

Weiterhin betrifft die Erfindung ein Verfahren zur Funktionskontrolle eines Überwachungsgeräts, das eine Stromerfassungseinrichtung, eine Stromauswertungseinrichtung und eine Abschalteinrichtung zur Öffnung des Verbraucherstromkreises bei Ansteuerung durch die Stromauswertungseinrichtung umfaßt.

Ein gattungsgemäßes Überwachungsgerät ist aus der DE-OS 33 11 240 bekannt. Die Abschalteinrichtung dient hier zum Öffnen bzw. Schließen von Stromkreises bei Überlast. Hierzu weist das Überwachungsgerät Mittel auf, die unter Berücksichtigung eines thermischen Abbildes Schwellwerte zur Auslösung der Abschalteinrichtung bilden.

Aus der Europäischen Patentschrift 0 391 143 ist ein Überwachungsgerät mit Schaltvorrichtung bekannt, das zusätzlich zu den Parametern eines zu überwachenden Motors Steuerparameter und den Zustand der angeschlossenen Schaltung wirksam überwacht und anzeigt. Hier werden also Eigenfehler, d.h. Hardware- oder Software-Fehler sowie der Ausfall eines Kommunikationsbusses bzw. der Versorgungsspannung erfaßt. Insofern besitzt das bekannte Überwachungsgerät eine Selbstdiagnosefunktion.

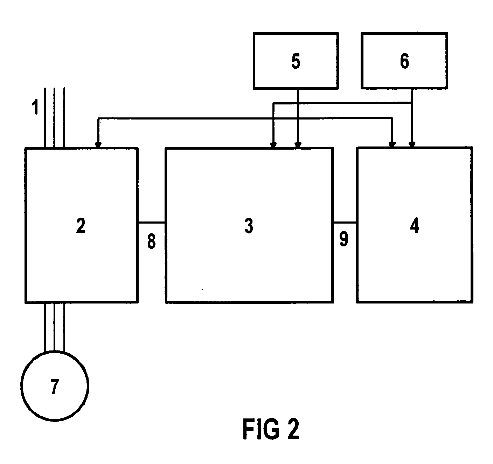

FIG 2 zeigt ein Blockdiagramm eines bekannten Überwachungsgeräts 1 zur Überwachung eines mit dreiphasigem Strom 1 versorgten Verbrauchers 7. Das Überwachungsgerät weist eine Stromerfassungseinrichtung 2, eine Stromauswertungseinrichtung 3, eine Abschalteinrichtung 4, eine Testeinrichtung 5 und eine Rücksetzeinrichtung 6 auf, die in bekannter Weise zusammenarbeiten.

Die Überwachungsgeräte, zu denen auch Überlastrelais und Motorschutzschalter gehören dienen zum Schutz von elektrischen Verbrauchern, vorzugsweise Elektromotoren. Um sicherzustellen, daß die gewünschte Schutzfunktion im Bedarfsfalle auch anspricht, muß das Schutzverhalten, besonders bei sicherheitsrelevanter Anwendung, überprüft werden können. Diese Überprüfung der kompletten Schutzfunktion konnte bisher nur im abgeschalteten Zustand bzw. nach Ausbau des Schutzorgans durchgeführt werden oder es wurden Teilkomponenten geprüft.

Die bekannten, obengenannten Überwachungsgeräte erfassen den dreiphasigen Verbraucherstrom über Stromwandler, Heizwicklungen oder andere Stromerfassungseinrichtungen. Die Auswertung des Stromes hinsichtlich des Überlastfalles erfolgt über Bimetallstreifen, analogen oder digitalen Auswerteschaltungen. Die für die Abschaltung erforderlichen Schaltelemente können direkt im Hauptstromkreis liegen, Hilfsschaltglieder oder serielle Bussignale sein. Bisher wurde zur Durchführung der erforderlichen Funktionstests über eine Testeinrichtung des Überwachungsgeräts eine mechanische oder elektrische Wirkung auf die Abschalteinrichtung gegeben. Bei dieser Art des Tests wird allerdings nur die Abschalteinrichtung getestet. Zum Test des Gesamtgeräts mit den Einzelelementen Stromerfassungseinrichtung, Stromverarbeitungseinrichtung und Abschalteinrichtung muß bisher das gesamte Schutzgerät aus dem dreiphasigen Verbraucherstromkreis herausgetrennt werden und über eine Simulation des Verbraucherstromes die Schutzfunktion geprüft werden. Neben dem Heraustrennen ist auch die Simulation des Verbraucherstromes, insbesondere bei großen Strömen, aufwendig. Bei elektronischen Überwachungsgeräten kann die Testeinrichtung auch auf die Auswerteeinrichtung wirken. Zum Test der Gesamtfunktion ist jedoch ein Heraustrennen aus dem Verbraucherstromkreis stets notwendig.

Der Erfindung liegt die Aufgabe zugrunde, ein Überwachungsgerät der obengenannten Art zu schaffen, bei dem die Gesamtfunktionalität aus Stromerfassungseinrichtung, Stromverarbeitungseinrichtung und Abschalteinrichtung durchgehend und ohne Heraustrennen aus dem Verbraucherstromkreis durchführbar ist. Daneben besteht die Aufgabe, zum Funktionstest des Überwachungsgeräts ein geeignetes Verfahren anzugeben.

Die erste Aufgabe wird erfindungsgemäß durch die Merkmale nach Anspruch 1 gelöst. Danach umfaßt das Überwachungsgerät eine Stromerfassungseinrichtung, eine Stromauswertungseinrichtung, eine Abschalteinrichtung zur Öffnung des Verbraucherstromkreises bei Ansteuerung durch die Stromauswertungseinrichtung, eine Testeinrichtung zum Test der Funktionsfähigkeit der Stromerfassungseinrichtung und der Stromauswertungseinrichtung und einen Mikrocontroller, der ein Ablaufprogramm aufweist, das nach Aktivierung der Testeinrichtung verschiedene Testphasen des Funktionstests einleitet.

Vorteilhafte Weiterbildungen des Überwachungsgeräts gemäß Patentanspruch 1 sind den Unteransprüchen 2 bis 6 zu entnehmen.

Die weitere Aufgabe wird erfindungsgemäß durch das Verfahren mit den Merkmalen gemäß Patentanspruch 7 gelöst. Es handelt sich dabei um ein Verfahren zur Funktionskontrolle eines Überwachungsgeräts, das mit einer Stromerfassungseinrichtung, mit einer Stromauswertungseinrichtung, mit einer Abschalteinrichtung zur Öffnung des Verbraucherstromkreises bei Ansteuerung durch die Stromauswertungseinrichtung, mit einer Testeinrichtung zum Test der Funktionsfähigkeit der Stromerfassungseinrichtung und der Stromauswertungseinrichtung und mit einem Mikrocontroller ausgestattet ist, der ein Ablaufprogramm aufweist, das nach Aktivierung der Testeinrichtung verschiedene Testphasen des Funktionstests einleitet, wobei zum Test der Stromerfassungseinrichtung von ihr gebildete, dem Verbraucherstrom proportionale Signale in der Stromauswertungseinrichtung vom Ablaufprogramm ausgewertet werden und zum Test der Stromauswertungseinrichtung dem Eingang der Stromauswertungseinrichtung über Entkoppelelemente ein Testpotential zugeführt wird.

Demzufolge wird gemäß der Erfindung bei Betätigen der Testeinrichtung zusätzlich zum Test der Stromverarbeitungseinrichtung unterschieden, ob der Verbraucherstromkreis aktiv ist oder nicht, und dies wird durch unterschiedliche Signalgebung angezeigt oder gemeldet. Die Aktivierung der Abschaltfunktion der Abschalteinrichtung kann zeitverzögert erfolgen. Der Test der Stromerfassungseinrichtung und der Stromverarbeitungseinrichtung kann wahlweise mit und ohne Unterbrechung des Verbraucherstromkreises erfolgen. Es wird also gemäß der Erfindung der Verbraucherstrom zum Test der Stromerfassungseinrichtung mit herangezogen. Für den Anwender ist dies besonders einfach, da dieser Zustand leicht herbeigeführt werden kann. Mittels unterschiedlicher Ergebnisauswertung und Anzeige kann unterschieden werden nach Test der Stromauswertungseinrichtung für sich genommen oder der Stromerfassungseinrichtung gemeinsam mit der Stromauswertungseinrichtung. Durch die zeitliche Trennung der Testphasen der Stromerfassungseinrichtung und der Stromauswertungseinrichtung und der Testphase der Abschalteinrichtung kann dies außerdem mit und ohne Beeinträchtigung des laufenden Betriebes erfolgen.

Ein Ausführungsbeispiel der Erfindung wird im folgenden anhand einer Zeichnung näher erläutert. Es zeigen:
- FIG 1: ein schematisches Funktionsdiagramm des Überwachungsgeräts,
- FIG 2: ein Blockdiagramm eines bekannten Überwachungsgeräts und
- FIG 3: ein Prüfschema mit unterschiedlichen Testphasen.

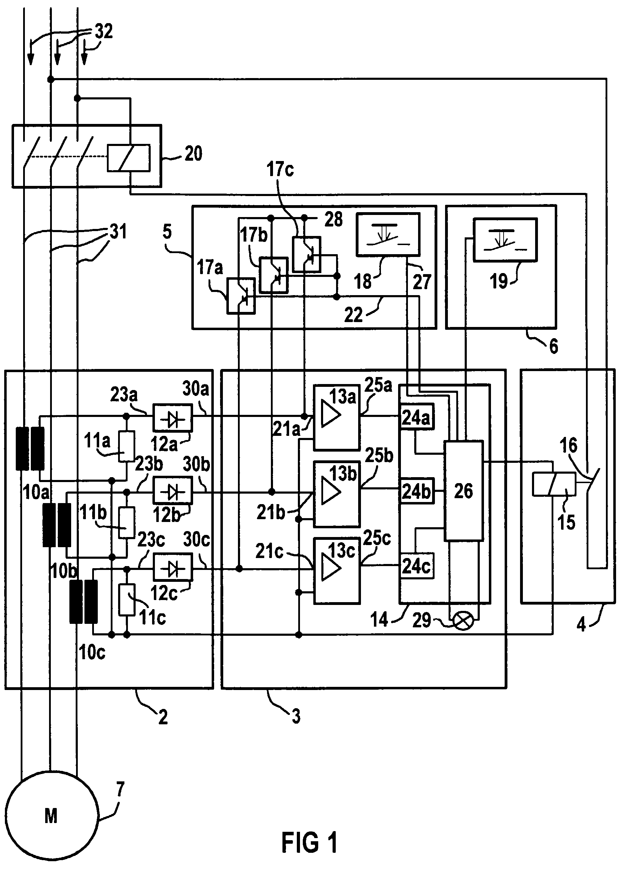

Das schematische Funktionsdiagramm nach FIG 1 zeigt einen dreiphasigen Verbraucherstromkreis mit einem Verbraucher 7, z.B. einem Motor, mit Stromleitern 31, die über einen Unterbrecher, im vorliegenden Fall ein Schütz 20, von der Zuleitung getrennt werden können, um somit den dreiphasigen Verbraucherstrom 32 zu unterbrechen. Der Schutz des Verbrauchers 7 wird mittels eines erfindungsgemäßen Überwachungsgeräts garantiert, das eine Stromerfassungseinrichtung 2, eine Stromauswertungseinrichtung 3, eine Abschalteinrichtung 4, eine Testeinrichtung 5 und eine Rücksetzeinrichtung 6 umfaßt. Zwischen dem Verbraucher 7 und dem Schütz 20 sind der Stromerfassungseinrichtung 2 zugehörige Stromwandler 10a,10b,10c geschaltet, deren Sekundärwicklungen mit ohmschen Widerständen 11a,11b,11c bebürdet sind. Weiterhin weist die Stromerfassungseinrichtung 2 an die Widerstände 11a,11b,11c angeschlossene Gleichrichterelemente 12a,12b,12c auf, die als Einweg- oder Zweiweg-Gleichrichter ausgeführt sein können. Der Stromerfassungseinrichtung 2 schließt sich die Stromauswertungseinrichtung 3 an, die Verstärker 13a,13b,13c und einen nachgeschalteten Mikrocontroller 14 aufweist, wobei letzterer Analog-/Digital-Wandler 24a,24b,24c und ein die Überwachung bzw. den Schutz steuerndes Ablaufprogramm 26 enthält. An das Ablaufprogramm 26 ist eine Leuchtdiode 29 geschaltet. Die Gleichrichterelemente 12a,12b,12c sind mit Verstärkereingängen 21a,21b,21c der Verstärker 13a,13b,13c verbunden.

Die Testeinrichtung 5 umfaßt eine Testtaste 18 sowie Entkopplungselemente 17a,17b,17c, die ebenso wie die Testtaste 18 mit dem Ablaufprogramm 26 in Verbindung stehen. Sie erzeugt ein an den Entkopplungselementen 17a,17b,17c anstehendes Testpotential 28. Außerdem sind die Entkopplungselemente 17a,17b,17c an die Verstärkereingänge 21a,21b,21c geschaltet. Die Abschalteinrichtung 4 enthält im vorliegenden Beispiel ein Leiterkartenrelais 15 mit einem Hilfsschalter 16, der zur Ansteuerung des Schützes 20 dient.

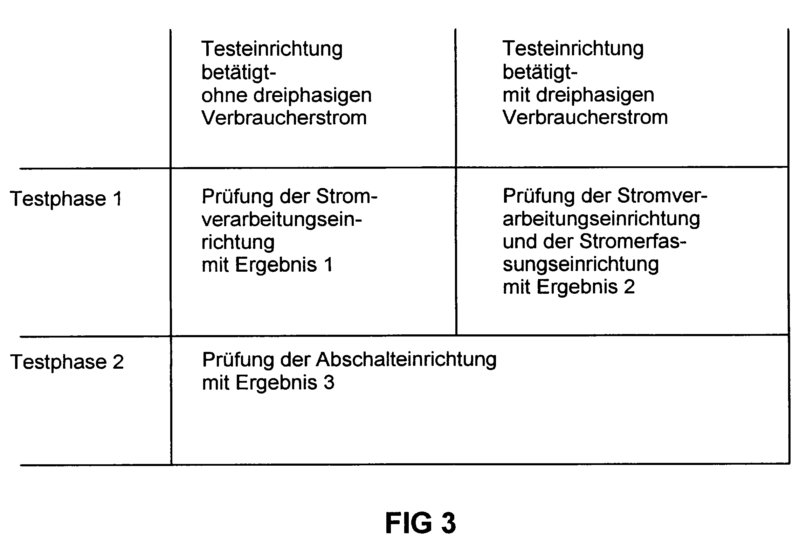

Das Überwachungsgerät ermöglicht mit Hilfe der Testeinrichtung 5, die Funktionsfähigkeit der einzelnen Komponenten 2,3,4 zu überprüfen. Hierzu werden zwei Testphasen 1 und 2 gemäß FIG 3 unterschieden. In der Testphase 1 wird eine Prüfung mit und ohne dreiphasigen Verbraucherstrom vorgenommen. Dabei wird die Stromauswertungseinrichtung 3 ohne und die Stromerfassungseinrichtung 2 in Verbindung mit der Stromauswertungseinrichtung 3 mit dreiphasigen Verbraucherstrom geprüft. In der Testphase 2 erfolgt die Prüfung der Abschalteinrichtung 4.

Im folgenden wird die Funktion des Überwachungsgeräts erläutert. Der im Wandlerverhältnis der Stromwandler 10a,10b,10c transformierte dreiphasige Verbraucherstrom erzeugt in den Bürdenwiderstanden 11a,11b,11c drei dem Verbraucherstrom proportionale Wechselspannungssignale 23a,23b,23c. Diese werden durch die Gleichrichterelemente 12a,12b,12c in Gleichspannungssignale 30a,30b,30c gewandelt und auf die Verstärkereingänge 21a,21b,21c geführt. Die Verstärker 13a,13b,13c nehmen die Signalanpassung für den Mikrocontroller 14 mit der Ablaufsteuerung 26 vor.

Bei Betätigung der Testtaste 18 wird ein an die Ablaufsteuerung 26 geführtes Testsignal 27 erzeugt, woraufhin der Mikrocontroller 14 über ein Testsignal 22 das Testpotential 28 über die Entkoppelelemente 17a,17b,17c auf die Verstärkereingänge 21a,21b,21c schaltet. Die Übertragung des Testsignals 22 durch das Ablaufprogramm 26 des Mikrocontrollers 14 ermöglicht die programmgesteuerte Zuschaltung der Gleichspannungssignale 30a,30b,30c oder des Testpotentials 28 an die Stromauswertungseinrichtung 3. Der Testablauf kann z.B. gemäß FIG 3 festgelegt sein, nachdem bei Aktivieren der Testeinrichtung 5 zunächst die Gleichspannungssignale 30a,30b,30c in der Stromauswertungseinrichtung 3, d.h. durch die Ablaufsteuerung 26 ausgewertet werden. Bei Erkennen eines dreiphasigen Verbraucherstroms wird dies z.B. durch "Flimmern" der Leuchtdiode 29 angezeigt und im Mikrocontroller 26 als Ergebnis 2 gespeichert.

Wird kein Verbraucherstrom erkannt, wird die Testvorrichtung 5 wiederum über die Testtaste 18 aktiviert. Hierauf schaltet die Ablaufsteuerung mittels des Testsignals 22 das Testpotential 28 über die Entkoppelelemente 17a,17b,17c auf die Verstärkereingänge 21a,21b,21c. Das Testpotential 28 wird zur Auswertung zum Mikrocontroller 14 geleitet, dessen Ablaufprogramm 26 bei Erkennen des Testpotentials 28 ein "Blinken" der Leuchtdiode 29 bewirkt und dies zugleich als Ergebnis 1 abspeichert.

Auf diese Weise ist sowohl der Zustand der Stromauswertungseinrichtung 3 und bei dreiphasigem Verbraucherstrom auch der Zustand der Stromerfassungseinrichtung 2 erfaßbar und erkennbar. In der weiteren Testphase gemäß FIG 3 wird z.B. nach einer im Ablaufprogramm 26 hinterlegten festen Zeit, bezogen auf die Aktivierung der Testeinrichtung 5, die Abschalteinrichtung 4 getestet. Hierzu wird das Leiterkartenrelais 15 durch das Ablaufprogramm 26 angesteuert, das den Hilfsschalter 16 öffnet und damit über den Schütz 20 den dreiphasigen Verbraucherstromkreis unterbricht.

## Patentansprüche

1. Überwachungsgerät mit einer Stromerfassungseinrichtung (2), mit einer Stromauswertungseinrichtung (3), mit einer Abschalteinrichtung (4) zur Öffnung des Verbraucherstromkreises bei Ansteuerung durch die Stromauswertungseinrichtung (3), mit einer Testeinrichtung (5) zum Test der Funktionsfähigkeit der Stromerfassungseinrichtung (2) und der Stromauswertungseinrichtung (3) und mit einem Mikrocontroller (14), der ein Ablaufprogramm (26) aufweist, das nach Aktivierung der Testeinrichtung (5) verschiedene Testphasen des Funktionstests einleitet.

2. Überwachungsgerät nach Anspruch 1**, dadurch gekennzeichnet,** daß die bei den Testphasen gewonnenen Testergebnisse im Mikrocontroller (14) speicherbar sind.

3. Überwachungsgerät nach Anspruch 2, **dadurch gekennzeichnet,** daß eine Leuchtdiode (29) zur Anzeige der Testergebnisse vorgesehen ist.

4. Überwachungsgerät nach einen der vorangehenden Ansprüche, **dadurch gekennzeichnet,** daß am Mikrocontroller (14) ein serieller Bus zur Meldung der Testergebnisse vorhanden ist.

5. Überwachungsgerät nach einen der vorangehenden Ansprüche, **dadurch gekennzeichnet,** daß die Testeinrichtung (5) Entkoppelelemente (17a,17b,17c) enthält, über die dem Eingang (21a,21b,21c) der Stromauswertungseinrichtung (3) ein Testpotential (28) zuführbar ist.

6. Überwachungsgerät nach einen der vorangehenden Ansprüche, **dadurch gekennzeichnet,** daß die Stromerfassungseinrichtung (2) dem Verbraucherstrom proportionale Signale bildet, die in der Stromauswertungseinrichtung (3) vom Ablaufprogramm (26) ausgewertet werden.

7. Verfahren zur Funktionskontrolle eines Überwachungsgeräts, das mit einer Stromerfassungseinrichtung (2), mit einer Stromauswertungseinrichtung (3), mit einer Abschalteinrichtung (4), die bei Ansteuerung durch die Stromauswertungseinrichtung (3) einen Verbraucherstromkreis öffnet, mit einer Testeinrichtung (5) zum Test der Funktionsfähigkeit der Stromerfassungseinrichtung (2) und der Stromauswertungseinrichtung (3) und mit einem Mikrocontroller (14) ausgestattet ist, der ein Ablaufprogramm (26) aufweist, das nach Aktivierung der Testeinrichtung (5) verschiedene Testphasen des Funktionstests einleitet, wobei zum Test der Stromerfassungseinrichtung (2) von ihr gebildete, dem Verbraucherstrom proportionale Signale in der Stromauswertungseinrichtung (3) vom Ablaufprogramm (26) ausgewertet werden und zum Test der Stromauswertungseinrichtung (3) dem Eingang (21a,21b,21c) der Stromauswertungseinrichtung (3) über Entkoppelelemente (17a,17b,17c) ein Testpotential (28) zugeführt wird.
